# EUROPÄISCHE PATENTSCHRIFT

(11) **EP 4 128 741 B1**
(45) Veröffentlichungstag und Bekanntmachung des Hinweises auf die Patenterteilung: **07.08.2024**
(21) Anmeldenummer: 20835695.6
(22) Anmeldetag: 10.12.2020
(51) Int. Cl.: H04N 7/18, H04N 23/60, H04N 23/63, H04N 23/66

(54) **VERFAHREN UND STEUEREINHEIT ZUR STEUERUNG EINER KAMERA**
METHOD AND CONTROL UNIT FOR CONTROLLING A CAMERA
PROCÉDÉ ET UNITÉ DE COMMANDE POUR LA COMMANDE D'UNE CAMÉRA

(30) Priorität: 25.03.2020 DE 102020108130
(43) Veröffentlichungstag der Anmeldung: 08.02.2023
(73) Patentinhaber: Bayerische Motoren Werke Aktiengesellschaft, 80809 München (DE)
(72) Erfinder: LIEBAU, Daniel, 84028 Landshut (DE); LIEBAU, Claudia, 84028 Landshut (DE)
(86) Internationale Anmeldenummer: PCT/EP2020/085485
(87) Internationale Veröffentlichungsnummer: WO 2021/190777

(56) Entgegenhaltungen:
- DE-A1- 102017 219 926
- DE-A1- 102018 132 369
- US-A1- 2014 136 098
- US-A1- 2015 356 864

## Beschreibung

Die Erfindung betrifft die Steuerung einer Kamera in einem Fahrzeug.

Es kommt häufig vor (z.B. auf einer Urlaubsreise), dass ein Insasse eines Fahrzeugs bei einer Fahrt mit dem Fahrzeug mit einer Kamera Fotos von der Umgebung des Fahrzeugs machen möchte. Dabei ist es für den Insassen des Fahrzeugs aufgrund der Bewegung des Fahrzeugs typischerweise schwierig, den richtigen Zeitpunkt für das Auslösen der Kamera abzupassen. Als Folge daraus ist die Qualität der in einem Fahrzeug erfassten Fotos häufig relativ niedrig. DE 10 2018 132369 A1 beschreibt ein System zur Ermittlung einer Außenansicht eines Fahrzeugs. DE 10 2017 219926 A1 beschreibt ein System zur Durchführung einer Abtastung an einer bestimmten geographischen Position. US 2014/136098 A1 beschreibt ein System zur automatischen Erfassung von Kameradaten. US 2015/356864 A1 beschreibt ein Fahrzeugüberwachungssystem.

Das vorliegende Dokument befasst sich mit der technischen Aufgabe, in zuverlässiger und effizienter Weise die Güte der bei der Fahrt in einem Fahrzeug erfassten Bilder bzw. Fotos einer Kamera zu erhöhen.

Die Aufgabe wird durch jeden der unabhängigen Ansprüche gelöst. Vorteilhafte Ausführungsformen werden u.a. in den abhängigen Ansprüchen beschrieben.

Gemäß einem Aspekt wird eine Steuereinheit zur Steuerung einer Kamera beschrieben (z.B. eine (Digital-) Kamera, die von einem Nutzer in der Hand gehalten werden kann, etwa einer Spiegelreflexkamera oder einer Kompaktkamera), die in einem (Kraft-) Fahrzeug mitgeführt wird. Die Kamera kann z.B. von dem Nutzer gehalten werden. Alternativ kann die Kamera an einer Halterung des Fahrzeugs (im Innenraum des Fahrzeugs) befestigt sein. Die Steuereinheit kann zumindest teilweise (oder vollständig) Teil der Kamera sein. Alternativ oder ergänzend kann die Steuereinheit zumindest teilweise (oder vollständig) Teil des Fahrzeugs sein. Die Steuereinheit kann eingerichtet sein, mit der Kamera über eine drahtlose oder eine drahtgebundene Kommunikationsverbindung zu kommunizieren (insbesondere, um es der Steuereinheit zu ermöglichen, die Kamera zu steuern).

Die Steuereinheit ist eingerichtet, Motivdaten in Bezug auf ein zu erfassendes Motiv zu ermitteln. Das Motiv kann in Fahrtrichtung des Fahrzeugs vor, neben oder hinter dem Fahrzeug angeordnet sein. Die Motivdaten können dabei den Auslösezeitpunkt und/oder die Auslöseposition anzeigen, an dem bzw. an der die Kamera auszulösen ist, um das Foto von dem Motiv aufzunehmen.

Die Motivdaten können von einer Fahrzeug-externen Einheit (außerhalb des Fahrzeugs) gesendet und von der Steuereinheit empfangen werden (z.B. über eine drahtlose Kommunikationsverbindung). Insbesondere kann die Steuereinheit eingerichtet sein, eine Anfrage in Bezug auf die Bereitstellung von Motivdaten für das Motiv an eine Fahrzeug-externe Einheit zu senden (z.B. basierend auf einer Nutzereingabe an einer Benutzerschnittstelle). Des Weiteren kann die Steuereinheit eingerichtet sein, in Reaktion auf die Anfrage die Motivdaten von der Fahrzeug-externen Einheit zu empfangen.

Die Motivdaten können dabei von einem anderen Verkehrsteilnehmer (z.B. von einem vorausfahrenden Fahrzeug) empfangen werden, der in Fahrtrichtung des Fahrzeugs vor dem Fahrzeug angeordnet ist. Alternativ oder ergänzend können die Motivdaten von einer Infrastruktureinheit (z.B. an einer Brücke) des von dem Fahrzeug befahrenen Fahrbahnnetzes empfangen werden. Die Daten können über Vehicle-to-Vehicle Kommunikation empfangen werden.

Die Steuereinheit ist ferner eingerichtet, die Kamera in Abhängigkeit von den Motivdaten (insbesondere automatisch) zu steuern, um mittels der Kamera ein Foto von dem Motiv aufzunehmen.

Es können somit Motivdaten bereitgestellt werden (insbesondere von einer Fahrzeug-externen Einheit), die es dem Nutzer der Kamera ermöglichen, die Kamera (insbesondere automatisch) zu steuern, um ein qualitativ hochwertiges Foto von einem Motiv zu machen.

Die Motivdaten können anzeigen, wie sich das Fahrzeug für die Aufnahme des Fotos des Motivs bewegen sollte. Insbesondere können die Motivdaten anzeigen: die Fahrspur, in der sich das Fahrzeug zur Aufnahme des Fotos befinden sollte; die Fahrgeschwindigkeit, die das Fahrzeug zur Aufnahme des Fotos aufweisen sollte; die Trajektorie, entlang der das Fahrzeug zur Aufnahme des Fotos fahren sollte; und/oder die Ausrichtung, die das Fahrzeug relativ zu dem Motiv zur Aufnahme des Fotos aufweisen sollte.

Die Steuereinheit kann eingerichtet sein, zu veranlassen, dass sich das Fahrzeug wie durch die Motivdaten angezeigt bewegt. Insbesondere kann die Steuereinheit eingerichtet sein, einen Hinweis an einen Fahrer des Fahrzeugs auszugeben, um zu veranlassen, dass sich das Fahrzeug wie durch die Motivdaten angezeigt bewegt. Alternativ oder ergänzend kann die Steuereinheit eingerichtet sein, automatisiert in die Längs- und/oder Querführung des Fahrzeugs einzugreifen, um zu veranlassen, dass sich das Fahrzeug wie durch die Motivdaten angezeigt bewegt.

Die Steuereinheit kann somit eingerichtet sein, zeitabhängig einen Zielzustand des Fahrzeugs zur Aufnahme des Fotos ausgehend von einem Istzustand des Fahrzeugs zu erreichen. Zu diesem Zweck kann z.B. eine Längsverzögerung (Bremsen) und/oder eine Querbewegung (Lenken) des Fahrzeugs bewirkt werden, um an dem Auslösezeitpunkt und/oder an der Auslöseposition den Zielzustand des Fahrzeugs zu erreichen. Durch die Beeinflussung der Bewegung des Fahrzeugs für die Aufnahme des Fotos kann die Qualität des aufgenommenen Fotos weiter erhöht werden.

Die Steuereinheit kann eingerichtet sein, Positionsdaten (z.B. GPS Koordinaten) in Bezug auf die Position des Fahrzeugs zu ermitteln. Die Kamera kann dann auch in Abhängigkeit von den Positionsdaten, insbesondere unter Berücksichtigung einer digitalen Karte in Bezug auf das von dem Fahrzeug befahrene Fahrbahnnetz, gesteuert werden, um mittels der Kamera das Foto von dem Motiv aufzunehmen. So kann die Güte des aufgenommenen Fotos weiter erhöht werden.

Die Steuereinheit ist eingerichtet, Fahrzeugdaten in Bezug auf den Zustand des Fahrzeugs zu ermitteln. Die Fahrzeugdaten umfassen: Information in Bezug auf den Reifendruck zumindest eines Reifens des Fahrzeugs; Information in Bezug auf den Abnutzungszustand eines Reifens des Fahrzeugs; Information in Bezug auf den Beladungszustand des Fahrzeugs; und/oder Information in Bezug auf die Fahrgeschwindigkeit des Fahrzeugs. Die Kamera wird dann auch in Abhängigkeit von den Fahrzeugdaten gesteuert werden, um mittels der Kamera das Foto von dem Motiv aufzunehmen. So kann die Güte des aufgenommenen Fotos weiter erhöht werden.

Die Steuereinheit kann eingerichtet sein, Umfelddaten in Bezug auf das Umfeld des Fahrzeugs (insbesondere in Bezug auf das Motiv im Umfeld des Fahrzeugs) zu ermitteln. Die Umfelddaten können dabei durch ein oder mehrere Umfeldsensoren (z.B. eine Umfeldkamera, einen Radarsensor, einen Lidarsensor, etc.) des Fahrzeugs erfasst worden sein. Die Motivdaten können dann in präziser Weise (ggf. auch) auf Basis der Umfelddaten ermittelt werden. Alternativ oder ergänzend kann die Kamera des Nutzers (ggf. auch) in Abhängigkeit von den Umfelddaten gesteuert werden, um mittels der Kamera das Foto von dem Motiv aufzunehmen. So kann die Güte des aufgenommenen Fotos weiter erhöht werden.

Die Steuereinheit kann Zugriff auf eine Liste mit ein oder mehreren vorselektierten Motivtypen haben, wobei die Liste anzeigt, welche Motivtypen der Nutzer fotografieren möchte. Beispielhafte Motivtypen sind: Sehenswürdigkeiten, Sonnenuntergänge, Aussichtspunkte, Pflanzen, Tiere, etc. Die Steuereinheit kann eingerichtet sein, zu ermitteln, ob sich ein Motiv des vorselektierten Motivtypen auf der Fahrroute des Fahrzeugs befindet. Dies kann z.B. durch eine Anfrage an eine Fahrzeug-externe Einheit ermittelt werden (z.B. durch Anfrage an ein vorausfahrendes Fahrzeug oder an eine Infrastruktureinheit). Wenn ein Motiv des vorselektierten Motivtyps erkannt wird, so können Motivdaten für das erkannte Motiv ermittelt werden, um die Kamera zu steuern, so dass von der Kamera ein Foto von dem Motiv aufgenommen werden kann. So kann der Komfort für den Nutzer weiter erhöht werden.

Das Motiv kann ggf. ein Hintergrund-Motiv für ein Selbstportrait des Nutzers sein. Die Kamera kann dann gesteuert werden, um auf Basis der Motivdaten ein Selbstportrait des Nutzers (d.h. ein sogenanntes "Selfie") mit dem zu erfassenden Motiv im Hintergrund aufzunehmen.

Gemäß einem weiteren Aspekt wird ein (Straßen-) Kraftfahrzeug (insbesondere ein Personenkraftwagen oder ein Lastkraftwagen oder ein Bus oder ein Motorrad) beschrieben, das die in diesem Dokument beschriebene Steuereinheit umfasst.

Gemäß einem weiteren Aspekt wird ein Verfahren zur Steuerung einer Kamera beschrieben, die in einem Fahrzeug mitgeführt wird. Das Verfahren umfasst das Ermitteln von Motivdaten in Bezug auf ein zu erfassendes Motiv. Das zu erfassende Motiv kann in Fahrtrichtung des Fahrzeugs vorausliegend sein.

Alternativ oder ergänzend kann das Motiv neben oder hinter dem Fahrzeug angeordnet sein. Wenn sich das Motiv neben oder hinter dem Fahrzeug befindet, so kann z.B. (automatisch) eine Verzögerung des Fahrzeugs bewirkt werden, um noch ein Foto von dem Motiv aufnehmen zu können.

Des Weiteren umfasst das Verfahren das Steuern der Kamera in Abhängigkeit von den Motivdaten, um mittels der Kamera ein Foto von dem Motiv aufzunehmen. Die Motivdaten können von einer Fahrzeug-externen Einheit bereitgestellt werden.

Gemäß einem weiteren Aspekt wird ein Software (SW) Programm beschrieben. Das SW Programm kann eingerichtet werden, um auf einem Prozessor (z.B. auf einem Steuergerät eines Fahrzeugs) ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können soweit sie in den Schutzbereich der nachfolgenden Ansprüche fallen. Des Weiteren können jegliche Aspekte der in diesem Dokument beschriebenen Verfahren, Vorrichtungen und Systemen in vielfältiger Weise miteinander kombiniert werden, soweit dies Kombinationen in den Schutzbereich der nachfolgenden Ansprüche fallen. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1 beispielhafte Komponenten eines Fahrzeugs;
Figur 2 eine beispielhafte Fahrsituation mit einem zu erfassenden Motiv; und
Figur 3 ein beispielhaftes Verfahren zur Steuerung einer Kamera in einem Fahrzeug.

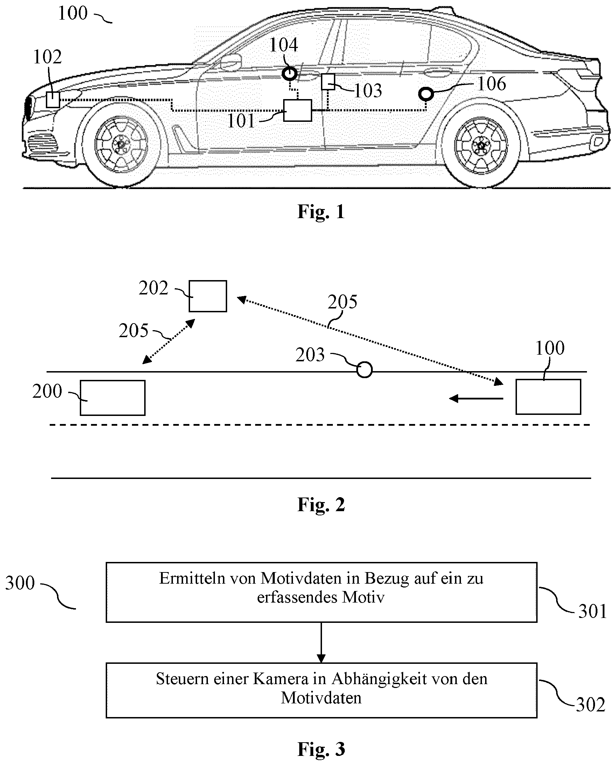

Wie eingangs dargelegt, befasst sich das vorliegende Dokument mit der Erhöhung der Güte von Fotos, die mit einer Kamera in einem Fahrzeug erfasst werden. In diesem Zusammenhang zeigt Fig. 1 beispielhafte Komponenten eines Fahrzeugs 100. Das Fahrzeug 100 kann ein oder mehrere Umfeldsensoren 102 (z.B. eine Umfeldkamera, einen Radarsensor, einen Lidarsensor, etc.) umfassen, die eingerichtet sind, Sensordaten (in diesem Dokument auch als Umfelddaten bezeichnet) in Bezug auf das Umfeld des Fahrzeugs 100 zu erfassen. Des Weiteren kann das Fahrzeug 100 einen Positionssensor 103 umfassen, der eingerichtet ist, Sensordaten (in diesem Dokument auch als Positionsdaten bezeichnet) in Bezug auf die Position des Fahrzeugs 100 zu erfassen. Außerdem kann das Fahrzeug 100 eine Kommunikationseinheit 106 umfassen, die eingerichtet ist, über eine (drahtlose) Kommunikationsverbindung Kommunikationsdaten mit einer Fahrzeug-externen Einheit (z.B. mit einer Infrastruktureinheit des von dem Fahrzeug 100 befahrenen Straßennetzes und/oder mit einem anderen Verkehrsteilnehmer) auszutauschen.

Des Weiteren ist in dem Fahrzeug 100 mindestens eine Kamera 104 angeordnet, die ausgebildet ist, Fotos in Bezug auf das Umfeld des Fahrzeugs 100 zu erfassen. Die Kamera 104 kann z.B. von einem Insassen des Fahrzeugs 100 gehalten werden. Alternativ kann die Kamera 104 an einer Halterung des Fahrzeugs 100 (nicht dargestellt) befestigt sein.

Eine Steuereinheit 101 des Fahrzeugs 100 kann eingerichtet sein, auf Basis der Umfelddaten, auf Basis der Positionsdaten (z.B. in Kombination mit einer digitalen Karte in Bezug auf das von dem Fahrzeug 100 befahrene Straßennetz) und/oder auf Basis von empfangenen Kommunikationsdaten Motivdaten in Bezug auf ein Motiv im Umfeld des Fahrzeugs 100 zu ermitteln, das mit der Kamera 104 erfasst werden soll. Insbesondere können die Motivdaten anzeigen bzw. umfassen,
- die Richtung und/oder die Ausrichtung und/oder die Position der Kamera 104 zum Erfassen des Motivs; und/oder
- den Auslösezeitpunkt und/oder die Auslöseposition, an dem bzw. an der die Kamera 104 ausgelöst werden muss, um das Motiv zu erfassen.

Die Steuereinheit 101 ist ferner eingerichtet, die Kamera 104 in Abhängigkeit von den Motivdaten zu steuern (z.B. durch Senden einer Steueranweisung an die Kamera 104 über eine drahtlose oder eine drahtgebundene Kommunikationsverbindung), um ein Foto des Motivs aufzunehmen.

Alternativ oder ergänzend kann die Steuereinheit 101 eingerichtet sein, eine Aktion des Nutzers der Kamera 104 basierend auf den Motivdaten zu steuern. Beispielsweise kann anhand einer Sprachausgabe, eines haptischen Signals und/oder eines optischen Signals veranlasst werden, dass der Nutzer die Kamera 104 zur Aufnahme des Fotos so hält, wie durch die Motivdaten angegeben (insbesondere an der Position und/oder mit der Ausrichtung hält, die durch die Motivdaten angegeben werden).

Fig. 2 zeigt eine beispielhafte Fahrsituation, bei der das Fahrzeug 100 einem anderen Verkehrsteilnehmer 200 (z.B. einem vorausfahrenden Fahrzeug) auf einer Fahrbahn folgt (dargestellt durch den Pfeil). Der Nutzer des Fahrzeugs 100 kann der Steuereinheit 101 des Fahrzeugs 100 über eine Benutzerschnittstelle mitgeteilt haben, dass mit der Kamera 104 während der Fahrt des Fahrzeugs 100 ein Foto von einem bestimmten Motiv 203 (z.B. von einer bestimmten Sehenswürdigkeit) gemacht werden soll, wobei das Motiv 203 in Fahrtrichtung des Fahrzeugs 100 vor dem Fahrzeug 100 liegen kann. Alternativ oder ergänzend kann das Motiv 203 neben oder hinter dem Fahrzeug 100 angeordnet sein.

Die Steuereinheit 101 kann über die Kommunikationseinheit 106 und/oder über eine (drahtlose) Kommunikationsverbindung 205 eine Fahrzeug-externe Einheit 200, 202, z.B. den vorausfahrenden Verkehrsteilnehmer 200 und/oder eine Infrastruktureinheit 202, beauftragen, Motivdaten in Bezug auf das zu erfassende Motiv 203 bereitzustellen. Beispielsweise kann die Fahrzeug-externe Einheit 200, 202 damit beauftragt werden, die genaue Position des zu erfassenden Motivs 203 zu ermitteln, und als Motivdaten an die Steuereinheit 101 zu senden. Die Kamera 104 in dem Fahrzeug 100 kann dann in präziser und zuverlässiger Weise auf Basis der empfangenen und/oder ermittelten Motivdaten betrieben werden, um ein qualitativ hochwertiges Foto von dem Motiv 203 (und ggf. von dem Nutzer) zu machen.

Die Motivdaten können von einem anderen Verkehrsteilnehmer 200 an einen Server kommuniziert werden, wobei der Server ausgebildet ist, die Motivdaten für eine Vielzahl von unterschiedlichen Motiven 203 zu speichern. Die Steuereinheit 101 kann dann bei Bedarf die Motivdaten für eine Auswahl von ein oder mehreren Motiven 203 von dem Server herunterladen. Die Steuereinheit 101 kann eingerichtet sein, die allgemein bereitgestellten Motivdaten für ein Motiv 203 auf die spezifische Situation des Fahrzeugs 100 umzurechnen (insbesondere in Bezug auf den genauen Auslösezeitpunkt und/oder die genaue Auslöseposition und/oder in Bezug auf die Ausrichtung der Kamera 104).

Es kann somit eine Datenbank von Motivdaten für interessante Motive 203 bereitgestellt werden. So kann der Komfort für die Nutzer von Kameras 104 weiter erhöht werden.

Es wird somit ein System zum optimalen bzw. optimierten und automatischen Auslösen einer handgeführten oder on-board installierten Kamera 104 in einem sich bewegenden Fahrzeug 100 beschrieben, um ein bestimmtes Motiv 203 zu fotografieren. Dabei soll das Motiv 203 in optimierter Weise (z.B. ohne ein störendes Hindernis und/oder mit korrekten Lichtverhältnissen (insbesondere nicht gegen die Sonne)) bei der aktuellen Fahrgeschwindigkeit des Fahrzeugs 100 fotografiert werden.

Zu diesem Zweck kann eine automatische Vorausberechnung des frühestmöglichen bzw. des genauen Zeitpunkts des Auslösens der Kamera 104 erfolgen. Der Trigger für das Auslösen der Kamera 104 kann z.B. (als Motivdaten) durch Car-to-Car oder Car-to-X Kommunikation empfangen werden. Anhand von Car-to-X Kommunikation kann eine fixe Koordinate in Bezug auf das Motiv 203 in einer hochaufgelösten digitalen Karte über das Fahrzeug 100, über die Infrastruktur 202, über eine App und/oder "over the air" an die Kamera 104 gesendet werden. Die Kamera 104 und/oder die Steuereinheit 101 des Fahrzeugs 100 können Zugriff auf die digitale Karte haben.

Anhand einer Car-to-Car Nachricht kann ein Signal (d.h. Motivdaten) von einem vorausfahrenden Fahrzeug 200 empfangen werden. Das vorausfahrende Fahrzeug 200 kann ausgebildet sein, anhand von ein oder mehrere Umfeldsensoren, die Position des Motivs 203 zu ermitteln. Insbesondere können von dem vorausfahrenden Fahrzeug 200 die optimale Auslöseposition und/oder der optimale Auslösezeitpunkt ermittelt werden. Dabei können aktuelle Witterungsbedingungen und/oder Lichtverhältnisse berücksichtigt werden. Die Information in Bezug auf den Auslösezeitpunkt bzw. die Auslöseposition kann dann als Motivdaten an die Steuereinheit 101 des nachfolgenden Fahrzeugs 100 und/oder direkt an die Kamera 104 gesendet werden.

Ggf. können mehrere unterschiedliche Informationsquellen (z.B. ein vorausfahrendes Fahrzeugs 200 und/oder eine Infrastruktureinheit 202) kombiniert werden, um den Auslösezeitpunkt bzw. die Auslöseposition in besonders präziser Weise zu ermitteln. Die Kamera 104 kann dann an der ermittelten Auslöseposition bzw. an dem ermittelten Auslösezeitpunkt ausgelöst werden, um ein optimiertes Foto von dem Motiv 203 zu erfassen.

Es kann ggf. für das Erfassen des Fotos vorteilhaft sein, dass das Fahrzeug 100, in dem sich die Kamera 104 befindet, seine Fahrspur, die Trajektorie innerhalb der Fahrspur, seine Geschwindigkeit mit Blick auf die Verkehrssituation und/oder eine vorliegende Geschwindigkeitsbegrenzung anpasst, um die Qualität des Fotos weiter zu erhöhen. Dies kann im Rahmen der ermittelten Motivdaten angezeigt und von der Steuereinheit 101 berücksichtigt werden. Insbesondere kann der Fahrer des Fahrzeugs 100 (z.B. durch Ausgabe eines Hinweises) veranlasst werden, den Fahrzustand des Fahrzeugs 100 für das Erfassen des Fotos zu ändern.

Im Rahmen des beschriebenen Systems bzw. Verfahrens werden folgende Daten und/ oder Informationen verwendet werden:
- Information in Bezug auf einen Reifendruck zumindest eines Reifens des Fahrzeugs;
- Information in Bezug auf einen Abnutzungszustand eines Reifens des Fahrzeugs;
- Information in Bezug auf einen Beladungszustand des Fahrzeugs.

Im Rahmen des beschriebenen Systems bzw. Verfahrens können des weiteren folgende Daten und/oder Informationen verwendet werden:
- Daten in Bezug auf ein oder mehrere Fahrzeugkomponenten; z.B. aktuelle Reifenreibwerte, Motorkraft und Drehmoment an den Achsen, etc.;
- GPS-Daten (Verkehr), Car-to-Car (V2V) Daten und/oder Car-to-X (V2X) Daten, um eine vorausfahrende Fahrzeugkolonne abzufragen, welche ggf. nicht durch die Umfeldkamera 102 des Fahrzeugs 100 ersichtlich ist (z.B. bei Kolonnenfahrten);
- Kartendaten und/oder Fahrbahngeometrie;
- Topografie (Steigung);
- Witterung und/oder Klima;
- Bremsleistung; und/oder
- Maximale Beschleunigungskräfte längs und/oder quer.

Fig. 3 zeigt ein Ablaufdiagramm eines beispielhaften (ggf. Computerimplementierten) Verfahrens 300 zur Steuerung einer Kamera 104 (etwa einer Kompaktkamera oder einer Spiegelreflexkamera), die in einem (Kraft-) Fahrzeug 100 (von einem Nutzer bzw. Insassen) mitgeführt wird. Beispielsweise kann die Kamera 104 von einem Insassen des Fahrzeugs 100 gehalten werden. Alternativ oder ergänzend kann die Kamera 104 an einer Halterung des Fahrzeugs 100 befestigt sein.

Das Verfahren 300 umfasst das Ermitteln 301 von Motivdaten in Bezug auf ein, ggf. in Fahrtrichtung des Fahrzeugs 100 vorausliegendes, zu erfassendes Motiv 203. Die Motivdaten können dabei von einer Fahrzeug-externen Einheit 200, 202 bereitgestellt werden (insbesondere über eine drahtlose Kommunikationsverbindung 205 an die Kamera 104 und/oder an das Fahrzeug 100 gesendet und/oder von der Kamera 104 und/oder dem Fahrzeug 100 empfangen werden).

Des Weiteren umfasst das Verfahren 300 das Steuern 302 der Kamera 104 in Abhängigkeit von den Motivdaten, um mittels der Kamera 104 ein Foto von dem Motiv 203 aufzunehmen. Insbesondere kann in Abhängigkeit von den Motivdaten (z.B. in Abhängigkeit von einem in den Motivdaten angezeigten Auslösezeitpunkt bzw. einer angezeigten Auslöseposition) automatisch der Auslöser der Kamera 104 betätigt werden, um ein Foto von dem Motiv 203 aufzunehmen.

Durch die in diesem Dokument beschriebenen Maßnahmen wird es einem Insassen eines Fahrzeugs 100 ermöglicht, auch bei einem fahrenden Fahrzeug 100 optimierte Fotos mit einer Kamera 104 zu machen. So können der Komfort und die Zufriedenheit des Insassen erhöht werden.

Die vorliegende Erfindung ist nicht auf die gezeigten Ausführungsbeispiele beschränkt, sondern wird durch die nachfolgenden Ansprüche definiert. Insbesondere ist zu beachten, dass die Beschreibung und die Figuren nur beispielhaft das Prinzip der vorgeschlagenen Verfahren, Vorrichtungen und Systeme veranschaulichen sollen.

## Patentansprüche

1. Steuereinheit (101) zur Steuerung einer Kamera (104), die in einem Fahrzeug (100) mitgeführt wird; wobei die Steuereinheit (101) eingerichtet ist,
- Motivdaten in Bezug auf ein zu erfassendes Motiv (203) zu ermitteln;
- Fahrzeugdaten in Bezug auf einen Zustand des Fahrzeugs (100) zu ermitteln; wobei die Fahrzeugdaten umfassen,
- Information in Bezug auf einen Reifendruck zumindest eines Reifens des Fahrzeugs (100);
- Information in Bezug auf einen Abnutzungszustand eines Reifens des Fahrzeugs (100); und/oder
- Information in Bezug auf einen Beladungszustand des Fahrzeugs (100); und
- die Kamera (104) in Abhängigkeit von den Motivdaten und in Abhängigkeit von den Fahrzeugdaten zu steuern, um mittels der Kamera (104) ein Foto von dem Motiv (203) aufzunehmen.

2. Steuereinheit (101) gemäß Anspruch 1, wobei die Motivdaten einen Auslösezeitpunkt und/oder eine Auslöseposition anzeigen, an dem bzw. an der die Kamera (104) auszulösen ist, um das Foto von dem Motiv (203) aufzunehmen.

3. Steuereinheit (101) gemäß einem der vorhergehenden Ansprüche, wobei die Steuereinheit (101) eingerichtet ist, die Motivdaten von einem anderen Verkehrsteilnehmer (200) zu empfangen, der in Fahrtrichtung des Fahrzeugs (100) vor dem Fahrzeug (100) angeordnet ist.

4. Steuereinheit (101) gemäß einem der vorhergehenden Ansprüche, wobei die Steuereinheit (101) eingerichtet ist, die Motivdaten von einer Infrastruktureinheit (202) eines von dem Fahrzeug (100) befahrenen Fahrbahnnetzes zu empfangen.

5. Steuereinheit (101) gemäß einem der vorhergehenden Ansprüche, wobei
- die Motivdaten anzeigen, wie sich das Fahrzeug (100) für die Aufnahme des Fotos des Motivs (203) bewegen sollte, insbesondere in Bezug auf
- eine Fahrspur, in der sich das Fahrzeug (100) befinden sollte;
- eine Fahrgeschwindigkeit des Fahrzeugs (100);
- eine Trajektorie des Fahrzeugs (100); und/oder
- eine Ausrichtung des Fahrzeugs (100) relativ zu dem Motiv (203); und
- die Steuereinheit (101) eingerichtet ist, zu veranlassen, dass sich das Fahrzeug (100) wie durch die Motivdaten angezeigt bewegt.

6. Steuereinheit (101) gemäß Anspruch 5, wobei die Steuereinheit (101) eingerichtet ist,
- einen Hinweis an einen Fahrer des Fahrzeugs (100) auszugeben, um zu veranlassen, dass sich das Fahrzeug (100) wie durch die Motivdaten angezeigt bewegt; und/oder
- automatisiert in die Längs- und/oder Querführung des Fahrzeugs (100) einzugreifen, um zu veranlassen, dass sich das Fahrzeug (100) wie durch die Motivdaten angezeigt bewegt.

7. Steuereinheit (101) gemäß einem der vorhergehenden Ansprüche, wobei die Steuereinheit (101) eingerichtet ist,
- Positionsdaten in Bezug auf eine Position des Fahrzeugs (100) zu ermitteln; und
- die Kamera (104) auch in Abhängigkeit von den Positionsdaten, insbesondere unter Berücksichtigung einer digitalen Karte in Bezug auf das von dem Fahrzeug (100) befahrene Fahrbahnnetz, zu steuern, um mittels der Kamera (104) das Foto von dem Motiv (203) aufzunehmen.

8. Steuereinheit (101) gemäß einem der vorhergehenden Ansprüche, wobei die Steuereinheit (101) eingerichtet ist,
- Umfelddaten in Bezug auf ein Umfeld des Fahrzeugs (100) zu ermitteln; wobei die Umfelddaten insbesondere durch ein oder mehrere Umfeldsensoren (102) des Fahrzeugs (100) erfasst wurden; und
- die Motivdaten auf Basis der Umfelddaten zu ermitteln.

9. Steuereinheit (101) gemäß einem der vorhergehenden Ansprüche, wobei die Steuereinheit (101) eingerichtet ist,
- eine Anfrage in Bezug auf die Bereitstellung von Motivdaten für das Motiv (203) an eine Fahrzeug-externe Einheit (200, 202) zu senden; und
- in Reaktion darauf die Motivdaten von der Fahrzeug-externen Einheit (200, 202) zu empfangen.

10. Verfahren (300) zur Steuerung einer Kamera (104), die in einem Fahrzeug (100) mitgeführt wird; wobei das Verfahren (300) umfasst,
- Ermitteln (301) von Motivdaten in Bezug auf ein zu erfassendes Motiv (203);
- Ermitteln von Fahrzeugdaten in Bezug auf einen Zustand des Fahrzeugs (100); wobei die Fahrzeugdaten umfassen,
- Information in Bezug auf einen Reifendruck zumindest eines Reifens des Fahrzeugs (100);
- Information in Bezug auf einen Abnutzungszustand eines Reifens des Fahrzeugs (100); und/oder
- Information in Bezug auf einen Beladungszustand des Fahrzeugs (100); und
- Steuern (302) der Kamera (104) in Abhängigkeit von den Motivdaten und von den Fahrzeugdaten, um mittels der Kamera (104) ein Foto von dem Motiv (203) aufzunehmen.

## Claims

1. Control unit (101) for controlling a camera (104) that is carried in a vehicle (100); the control unit (101) being configured
- to determine subject data relating to a subject (203) to be captured;
- to determine vehicle data relating to a state of the vehicle (100); the vehicle data comprising
- information relating to a tyre pressure of at least one tyre of the vehicle (100);
- information relating to a state of wear of a tyre of the vehicle (100); and/or
- information relating to a loading state of the vehicle (100); and
- to control the camera (104) according to the subject data and according to the vehicle data in order to use the camera (104) to take a photograph of the subject (203) .

2. Control unit (101) according to Claim 1, wherein the subject data indicate a trigger time and/or a trigger position at or in which the camera (104) needs to be triggered in order to take the photograph of the subject (203) .

3. Control unit (101) according to either of the preceding claims, wherein the control unit (101) is configured to receive the subject data from another road user (200) arranged in front of the vehicle (100) in the direction of travel of the vehicle (100).

4. Control unit (101) according to one of the preceding claims, wherein the control unit (101) is configured to receive the subject data from an infrastructure unit (202) of a road network used by the vehicle (100).

5. Control unit (101) according to one of the preceding claims, wherein
- the subject data indicate how the vehicle (100) should move to take the photograph of the subject (203), in particular with regard to
- a lane that the vehicle (100) should be in;
- a speed of travel of the vehicle (100);
- a trajectory of the vehicle (100); and/or
- an alignment of the vehicle (100) relative to the subject (203); and
- the control unit (101) is configured to cause the vehicle (100) to move as indicated by the subject data.

6. Control unit (101) according to Claim 5, wherein the control unit (101) is configured
- to output a cue to a driver of the vehicle (100) in order to cause the vehicle (100) to move as indicated by the subject data; and/or
- to take automated action in the longitudinal and/or lateral guidance of the vehicle (100) in order to cause the vehicle (100) to move as indicated by the subject data.

7. Control unit (101) according to one of the preceding claims, wherein the control unit (101) is configured
- to determine position data relating to a position of the vehicle (100); and
- to control the camera (104) according to the position data too, in particular in consideration of a digital map relating to the road network used by the vehicle (100), in order to use the camera (104) to take the photograph of the subject (203).

8. Control unit (101) according to one of the preceding claims, wherein the control unit (101) is configured
- to determine environment data relating to an environment of the vehicle (100); the environment data having been acquired in particular by one or more environment sensors (102) of the vehicle (100); and
- to determine the subject data on the basis of the environment data.

9. Control unit (101) according to one of the preceding claims, wherein the control unit (101) is configured
- to transmit a request relating to the provision of subject data for the subject (203) to a vehicle-external unit (200, 202); and
- to receive the subject data from the vehicle-external unit (200, 202) in response thereto.

10. Method (300) for controlling a camera (104) that is carried in a vehicle (100); the method (300) comprising
- determining (301) subject data relating to a subject (203) to be captured;
- determining vehicle data relating to a state of the vehicle (100); the vehicle data comprising
- information relating to a tyre pressure of at least one tyre of the vehicle (100);
- information relating to a state of wear of a tyre of the vehicle (100); and/or
- information relating to a loading state of the vehicle (100); and
- controlling (302) the camera (104) according to the subject data and according to the vehicle data in order to use the camera (104) to take a photograph of the subject (203) .

## Revendications

1. Unité de commande (101) pour commander une caméra (104) transportée dans un véhicule (100) ; l'unité de commande (101) étant conçue pour
- déterminer des données de motif relatives à un motif (203) à acquérir ;
- déterminer des données de véhicule relatives à un état du véhicule (100) ; les données de véhicule comprenant
- des informations relatives à une pression de gonflage d'au moins un pneumatique du véhicule (100) ;
- des informations relatives à un état d'usure d'un pneumatique du véhicule (100) ; et/ou
- des informations relatives à un état de charge du véhicule (100) ; et
- commander la caméra (104) en fonction des données de motif et en fonction des données de véhicule, afin de prendre une photographie du motif (203) au moyen de la caméra (104).

2. Unité de commande (101) selon la revendication 1, dans laquelle les données de motif indiquent un instant de déclenchement et/ou une position de déclenchement auquel ou à laquelle la caméra (104) doit être déclenchée pour prendre la photographie du motif (203).

3. Unité de commande (101) selon l'une quelconque des revendications précédentes, dans laquelle l'unité de commande (101) est conçue pour recevoir les données de motif d'un autre usager de la route (200) qui est situé à l'avant du véhicule (100) dans la direction de déplacement du véhicule (100).

4. Unité de commande (101) selon l'une quelconque des revendications précédentes, dans laquelle l'unité de commande (101) est conçue pour recevoir les données de motif en provenance d'une unité d'infrastructure (202) d'un réseau routier emprunté par le véhicule (100).

5. Unité de commande (101) selon l'une quelconque des revendications précédentes, dans laquelle
- les données de motif indiquent comment le véhicule (100) doit se déplacer pour prendre la photographie du motif (203), en particulier en ce qui concerne
- une voie de circulation dans laquelle le véhicule (100) doit se trouver ;
- une vitesse de déplacement du véhicule (100) ;
- une trajectoire du véhicule (100) ; et/ou
- une orientation du véhicule (100) par rapport au motif (203) ; et
- l'unité de commande (101) est conçue pour faire en sorte que le véhicule (100) se déplace comme indiqué par les données de motif.

6. Unité de commande (101) selon la revendication 5, l'unité de commande (101) étant conçue pour
- délivrer une indication à un conducteur du véhicule (100) pour faire en sorte que le véhicule (100) se déplace comme indiqué par les données de motif ; et/ou
- intervenir de manière automatisée dans le guidage longitudinal et/ou transversal du véhicule (100) afin de faire en sorte que le véhicule (100) se déplace comme indiqué par les données de motif.

7. Unité de commande (101) selon l'une quelconque des revendications précédentes, l'unité de commande (101) étant conçue pour
- déterminer des données de position relatives à une position du véhicule (100) ; et
- commander la caméra (104) également en fonction des données de position, notamment en tenant compte d'une carte numérique relative au réseau routier emprunté par le véhicule (100), afin de prendre la photographie du motif (203) au moyen de la caméra (104).

8. Unité de commande (101) selon l'une quelconque des revendications précédentes, l'unité de commande (101) étant conçue pour
- déterminer des données d'environnement relatives à un environnement du véhicule (100) ; les données d'environnement ayant été acquises en particulier par un ou plusieurs capteurs d'environnement (102) du véhicule (100) ; et
- déterminer les données de motif sur la base des données d'environnement.

9. Unité de commande (101) selon l'une quelconque des revendications précédentes, l'unité de commande (101) étant conçue pour
- envoyer à une unité extérieure au véhicule (200, 202) une requête relative à la fourniture de données de motif pour le motif (203) ; et
- en réponse à celle-ci, recevoir les données de motif en provenance de l'unité extérieure au véhicule (200, 202) .

10. Procédé (300) pour commander une caméra (104) transportée dans un véhicule (100) ; le procédé (300) consistant à
- déterminer (301) des données de motif relatives à un motif (203) à acquérir ;
- déterminer des données de véhicule relatives à un état du véhicule (100) ; les données de véhicule comprenant
- des informations relatives à une pression de gonflage d'au moins un pneumatique du véhicule (100) ;
- des informations relatives à un état d'usure d'un pneumatique du véhicule (100) ; et/ou
- des informations relatives à un état de charge du véhicule (100) ; et
- commander (302) la caméra (104) en fonction des données de motif et des données de véhicule afin de prendre une photographie du motif (203) au moyen de la caméra (104).
